# EUROPEAN PATENT SPECIFICATION

(11) **EP 1 435 591 B1**
(45) Date of publication and mention of the grant of the patent: **31.10.2012**
(21) Application number: 02775230.2
(22) Date of filing: 25.09.2002
(51) Int. Cl.: G06T 19/00, G06T 15/20, G06T 15/00

(54) **IMAGE CREATION APPARATUS AND METHOD,; ELECTRONIC DEVICE AND COMPUTER PROGRAM**
BILDERZEUGUNGSVORRICHTUNG UND -VERFAHREN, ELEKTRONISCHE EINRICHTUNG UND COMPUTERPROGRAMM
APPAREIL ET PROCEDE DE CREATION D'IMAGES, DISPOSITIF ELECTRONIQUE ET PROGRAMME INFORMATIQUE

(30) Priority: 26.09.2001 JP 2001295152
(43) Date of publication of application: 07.07.2004
(73) Proprietor: Pioneer Corporation, Kanagawa 212-0031 (JP)
(72) Inventor: MATSUMOTO, Reiji c/o PIONEER CORPORATION, Tsurugashima-shi, Saitama 350-2288 (JP); ADACHI, Hajime c/o PIONEER CORPORATION, Tsurugashima-shi, Saitama 350-2288 (JP)
(74) Representative: Haley, Stephen
(86) International application number: PCT/JP2002/009844
(87) International publication number: WO 2003/027964

(56) References cited:
- EP-A- 1 434 174
- EP-A- 1 437 689
- JP-A- 8 075 480
- JP-A- 9 062 179
- JP-A- 9 292 830
- JP-A- 9 292 830
- JP-A- 10 021 420
- JP-A- 10 021 420
- JP-A- 11 174 952
- JP-A- 11 232 484
- JP-A- 2000 293 705

## Description

### Technical Field

The present invention relates to an image generating apparatus for and method of generating a three-dimensional (3D) image on the basis of three-dimensional coordinate information, an electronic equipment such as a navigation system incorporating such an image generating apparatus, and a computer program.

### Background Art

Recently, there is remarkable R&D (research and development) about an electronic control for controlling a motion of a car as well as remarkable popularization of navigation systems to assist a car driving. The navigation system has a basic configuration, including various databases, for displaying map information, current position information, various guidance information and the like on a display unit. Furthermore, it is typically for the navigation system to search a drive route on the basis of an entered condition. It is further designed so as to display the searched drive route and a current position based on a GPS (Global Positioning System) measurement or a self-contained measurement on a map and carry out guidance (navigation) to a destination.

Incidentally, on the display unit of the navigation system that is mounted on a vehicle for the guidance (navigation) to the destination, a sight ahead of a current driving point is displayed in addition to the drive route, and further an instruction for a driving lane, a direction to go at an intersection, a distance to the intersection, a distance to a destination, arrival time estimation and so on are displayed. Then, the sight ahead of the current driving point may be displayed in a manner that gives a three-dimensional visual effect on a plane, i.e. as an image in perspective (herein referred to as so-called "3D image"), on the basis of the driver's visual line.

By the way, in order to display the 3D image as mentioned above with the course of time, it is required to calculate at high speed an enormous amount of map data including the three-dimensional coordinate information, which is sequentially inputted into the drawing device to be transformed into the 3D image. Therefore, there has been a way of generating the 3D image by processing, in a batch mode, a combination of the drawing object information, which is for indicating an object to be depicted such as roads or building, and the coordinate transformation information, which is for indicating a visual point, a visual range, a light source and so on. In this case, however, smoothly moving continuous 3D image can be hardly obtained, because of the time consuming image generation from the display list for each image, under the condition in that 3D image changes every moment like a scene from a running vehicle. On the other hand, there is a technique for displaying an image promptly, by storing the image information of an area bigger than the display area into a bigger frame buffer within which the display area can be displaced. This technique is a simple technique for displaying the 3D image, nevertheless, this solution using bigger frame buffer is not sufficient to address the problem of the display area displacement, no matter how the frame buffer is enlarged, since the image information stored in this bigger frame buffer is not sufficient to cover the display area that changes corresponding to the change of the visual point, which typically changes in the 3D images.

JP-A-09292830 discloses an image generating apparatus.

The present invention has been accomplished in view of the above problems and aims to provide an image generating apparatus and method capable of changing continuously a 3D image at high speed, to provide an electronic equipments incorporating such an image generating apparatus and to provide a computer program.

According to the present invention there is provided an image generating apparatus having: a drawing device, a drawing application processor and a graphics library that allows said drawing device to generate a three-dimensional image,
said drawing application processor comprising (i) a drawing object information generating device which is adapted to generate drawing object information to generate an image for each object in a respective one of at least one single coordinate systems each of which is for respective one predetermined information unit, on the basis of three-dimensional coordinate information to be included in a three-dimensional image to be generated, wherein the object is an object to be depicted, and (ii) a coordinate transformation information generating device which is adapted to generate coordinate transformation information to define at least a visual point and a visual range when the three-dimensional image is to be generated,
said graphics library comprising (i) a drawing object information storing device which is adapted to store the generated drawing object information, and (ii) a coordinate transformation information storing device which is adapted to store the generated coordinate transformation information, and
said drawing device being adapted to generate the three-dimensional image by incorporating the stored coordinate transformation information with the stored drawing object information, for said each predetermined information unit,
characterized in that
said drawing object information generating device is adapted to generate in advance, the drawing object information about another or other objects that are not included in a three-dimensional image to be displayed at present, and said drawing object information storing device is adapted to store, in advance, the drawing object information that is generated in advance, and
if another or other three-dimensional images to be displayed later includes said another or other objects, said drawing object information generating device is adapted not to re-generate the drawing object information about said another or other objects, and the drawing device is adapted to generate said another or other three-dimensional images, using the drawing object information that is stored in advance.

According to the image generating apparatus of the present invention, the image generating apparatus provided with the drawing application processor and the graphics library, generates, stores and manages data, which is divided into the coordinate transformation information and the drawing object information, each of which is generated by their respective information generating devices, in order to generate an image. On the basis of these stored and managed data, the drawing device generates a 3D image as a display image and outputs it to a display unit.

In this case, a batch execution of the drawing processing based on the coordinate transformation information and the drawing object information that are handled separately and independently improves a drawing speed of the drawing device. This is because that a data configuration according to the present invention avoids the limitation as seen in the prior data configuration wherein a coordinate transformation, which is an important element in the drawing, acts as a state machine having a state therein, and thereby a replacement of a single function as seen in a typical library to absorb a device dependence is not sufficient to cover the drawing device performance in the drawing.

In the present invention, the drawing object information generating device generates in advance the drawing object information about another or other objects that is/are not included in a 3D image to be displayed at the present, and the drawing object information storing device stores in advance this information. Then, if said another or other objects is/are included in another 3D image to be displayed in the next time or the time after, the drawing object information generating device does not re-generates the drawing object information about said another or other objects. In this case, the drawing device generates said another 3D image, using the drawing object information that is generated and stored in advance. Thus, if the visual point or the view range, which is designated by the coordinate transformation information, changes, but insofar as said another or other objects is/are included in the 3D image to be displayed after the change, the corresponding drawing object information stored in advance can be directly utilized, and thereby a 3D image is obtained by incorporating the new coordinate transformation information relative to the drawing object information. Thus, according to the present invention, the time consuming drawing object information generation can be omitted as appropriate, resulting in the higher speed image generation as a whole.

Particularly, in the case that the visual point or the view range designated by the coordinate transformation information changes continuously, an estimation or projection of the 3D image to be displayed in the next time or the time after is possible to a greater or less extent, and thereby the possibility of directly using the drawing object information generated and stored in advance is risen, resulting in the higher speed image generation.

Incidentally, specifically in the present invention, with regard to an expression "generating drawing object information in a single coordinate system for each predetermined information unit" about the drawing object information generating device, the "predetermined information unit" herein means a unit of display list for example, and corresponds to a unit of the coordinate transformation information to be incorporated with the drawing object information when the drawing device generates a 3D image. Further, although the coordinate system is unified in the same predetermined information unit such as the same playlist, the coordinate system is not necessarily unified among different predetermined information units.

In an aspect of the image generating apparatus of the present invention, the drawing object information generating device generates, in advance, the drawing object information about one or more objects, as said another or other objects, that exist around a visual range corresponding to said one three-dimensional image.

According to this aspect, said another or other objects is/are object(s) that exist(s) around the visual range corresponding to a 3D image, and thereby in a use in that the visual point or the visual range changes continuously, for example, in a use in that a 3D image is continuously displayed to display the scene around the vehicle using the navigation system or the like, the possibility of said another or other object(s) being included in the 3D image to be displayed in the next time or the time after is improved, resulting in the higher image generation from the drawing object information.

In this aspect of the image generating apparatus of the present invention, the drawing object information generating device generates, in advance, the drawing object information about one or more objects, as said another or other objects, that exist in an area extending behind the visual range as seen from the visual point.

In this arrangement, in the case that the visual point proceeds, the possibility of said another or other object(s) being included in the 3D image to be displayed in the next time or the time after is remarkably improved, resulting in the even higher image generation.

In another aspect of the image generating apparatus of the present invention, the apparatus is further provided with: a change information supply device for supplying change information in accordance with a predetermined rule, and the coordinate transformation information generating device generates the coordinate transformation information in accordance with the supplied change information.

According to this aspect, the change information supply device may generate the change information on the basis of the mathematical formula, or may supply the change information on the basis of the current position information determined with a positioning device mounted on the movable body. Then, if the coordinate transformation information generating device generates the coordinate transformation information on the basis of the change information, images that change in the course of the movement of the movable body or images in that objects change continuously in the course of time may be obtained.

In another aspect of the image generating apparatus of the present invention, every time when the coordinate transformation information generated by the coordinate transformation information generating device changes, the drawing device generates an image by incorporating the changed coordinate transformation information with the drawing object information.

According to this aspect, an image is generated, every time when the coordinate transformation information changes, that is, generated synchronously when the position of the movable body is changed with the movement thereof, or when the coordinate information obtained by a predetermined calculation is changed. Therefore, it is possible to output and display images in accordance with the movement of the movable body, without sacrificing its immediacy.

In another aspect of the image generating apparatus of the present invention, the drawing application processor executes: a list preparation program for preparing a list of the drawing object information about an area bigger than another area corresponding to said one three-dimensional image; a set up program for setting up the coordinate transformation information; and an execution instruction program for instructing an execution of a drawing in the drawing device.

According to this aspect, owing to the list preparation program for preparing a so-called "display list" corresponding to an area bigger than another area corresponding to a 3D image, and owing to the program for setting up the coordinate transformation information, the drawing object information and the coordinate transformation information can be treated separately, and thereby supplied separately to the graphics library, which is connected to the later stage in the system, with the execution instruction. Thereby, even if the system including the combination of the graphics library and the drawing device is replaced by another system of another combination, its ability of replacement is maintained. Furthermore, a 3D image of the same object with different coordinates can be obtained readily by altering the coordinate transformation information while the drawing object information is maintained or the drawing object information generated in advance is used.

In another aspect of the image generating apparatus of the present invention, the graphics library includes: a function for managing the coordinate transformation information; a function for managing the drawing object information; and a function for controlling the drawing device.

According to this aspect, owing to the function for managing the coordinate transformation information, the function for managing the drawing object information, and the function for controlling the drawing device, all of which are provided to the graphics library, a 3D image that the drawing device actually generates is controlled.

In another aspect of the image generating apparatus of the present invention, the drawing application processor includes a function in which map information including the three-dimensional coordinate information is supplied from a map database incorporated within a navigation system.

According to this aspect, on the basis of the map information from the map database, and further on the basis of current position information from a GPS positioning apparatus or the like incorporated within the navigation system and/or route information inputted by the driver, a 3D image based on the map information including the three-dimensional coordinate information, which is subjected to a predetermined coordinate transformation, is displayed on the display. Moreover, for the convenience of the driver, guidance information without the coordinate transformation may be superimposed onto the 3D image and then displayed.

In another aspect of the image generating apparatus of the present invention, the drawing device generates an image in perspective as the three-dimensional image.

According to this aspect, a scene such as a sight of the driver who sits and drives at the driver's seat is displayed as the 3D image in perspective, and thereby the driver can easily recognize the 3D image, in association with a real scene.

In another aspect of the image generating apparatus of the present invention, the coordinate transformation information includes information to define a light source, in addition to the information to define the visual point and the visual range.

According to this aspect, the drawing object can be transformed on the basis of the light source information in addition to the visual point information and the visual range information as the coordinate transformation information, to be displayed as more real image. Particularly, in the case that the light source designated by the coordinate transformation information changes, if the same object that is displayed before this change is included in the 3D image to be displayed after this change, a new 3D image is obtained by incorporating new coordinate transformation information with the different light source information into the drawing object information of the same object. On the other hand, if the drawing device is replaced, the coordinate transformation information such as the visual point information, visual range information, light source information and the like is applicable as it is.

In another aspect of the image generating apparatus of the present invention, the visual point is set on the basis of a visual point of a driver of a vehicle.

According to this aspect, a scene as a sight on the visual line of the driver is displayed as the 3D image, and thereby the driver can easily recognize the image as the image in perspective linked with the real scene. The visual point may be set up manually.

In another aspect of the image generating apparatus of the present invention, the visual range is set on the basis of a visual range of a driver of a vehicle.

According to this aspect, a scene within the visual range of the driver is displayed as the 3D image. The visual range may be set up manually.

In another aspect of the image generating apparatus of the present invention, the visual point in the 3D image is set at a center of a display device incorporated within a navigation system.

According to this aspect, a drawing object is subjected to the coordinate transformation to be displayed, for example, such that the visual point of the driver is positioned at the center of the display.

In another aspect of the image generating apparatus of the present invention, the drawing device generates a three-dimensional image by superimposing a plurality of partial frame images that are generated on the basis of the plurality of drawing object information generated and stored for each object.

According to this aspect, the 3D image that is generated by superimposing the plurality of partial frame images that are generated in accordance with each drawing object information is finally obtained and thereby a 3D image with more reality can be generated relatively quickly by the drawing device.

In this aspect, a frame buffer for temporarily storing the plurality of partial frame images may be further provided.

Owing to this arrangement, since the plurality of partial frame images are temporarily stored in the frame buffer, which may be disposed within a buffer memory managed by the drawing device, a 3D image can be generated relatively easily by superimposing them.

In another aspect of the image generating apparatus of the present invention, the drawing application processor re-generates the coordinate transformation information with the aid of the coordinate transformation information generating device, while the drawing object information is maintained for an object commonly included in two three-dimensional images in series, which differ sequentially from each other with the course of time.

According to this aspect, in the case that a 3D image that changes sequentially with the course of time is to be drawn, the coordinate transformation information is changed while the drawing object information is maintained, and thereby a process workload for the drawing can be reduced and the 3D image that changes sequentially can be generated quickly. For instance, on the basis of the same drawing object information, not only a series of images that changes sequentially in accordance with the movement of the vehicle is obtained by sequentially changing the visual point, but also a series of images in which shade or the like of an object continuously changes with the course of time is obtained by sequentially changing the light source.

In another aspect of the image generating apparatus of the present invention, the drawing application processor and the graphics library generate and store the drawing object information and the coordinate transformation information for the plurality of three-dimensional images in a multitask operation.

According to this aspect, since the coordinate transformation information and the drawing object information are generated and stored separately and independently in the multitask operation, it is feasible to generate the 3D image even faster as a whole.

In another aspect of the image generating apparatus of the present invention, the image generating apparatus includes the drawing device.

According to this aspect, the image generating apparatus is further provided with the drawing device internally or externally, in addition to the drawing application processor and the graphics library. Therefore, an environment capable of displaying the 3D image is obtained relatively easily, if a display unit such as a monitor is connected to the image generating apparatus.

An electronic equipment according to the present invention in order to solve the above problems is embodied in an electronic equipment characterized in that the electronic equipment comprises: the aforementioned image generating apparatus (including various aspects thereof); an information source from which the three-dimensional information is supplied to the drawing application processor; and a display device for visually outputting the 3D image that is generated by the drawing device.

According to the electronic equipment of the present invention, since the image generating apparatus of the present invention is employed, various electronic equipments can be implemented, including a navigation system such as on-vehicle navigation system capable of quickly displaying the 3D image, a game machine such as an arcade game, a TV game or the like, otherwise a computer such as a personal computer capable of displaying the 3D image.

The computer program according to the present invention, in order to solve the above problems, makes a computer function as the image generating apparatus as mentioned above (including various aspects of each image generating apparatus). More specifically, it makes a computer function as the drawing application processor, the graphics library and the drawing device, which are mentioned above as the components of the present invention. Further in detail, it makes a computer function as the drawing object information generating device, the coordinate transformation generating device, the drawing object information storing device and the coordinate transformation information storing device, which are mentioned above as the components of the present invention.

According to the computer program as the present invention, an integrated control for the image generating apparatus according to the present invention can be achieved relatively easily, by loading the computer program from a record medium such as a CD-ROM (Compact Disc Read Only Memory), a DVD-ROM (DVD Read Only Memory), a hard disk or the like, which stores the computer program, into the computer and executing the program, otherwise by downloading the computer program into the computer via a communication device and executing the program.

According to the present invention there is provided an image generating method comprising: (i) a drawing object information generating process of generating drawing object information to generate an image for each object in a respective one of at least one single coordinate systems each of which is for respective one predetermined information unit, on the basis of three-dimensional coordinate information to be included in a three-dimensional image to be generated, wherein the object is an object to be depicted and (ii) a coordinate transformation information generating process of generating coordinate transformation information to define at least a visual point and a visual range when the three-dimensional image is to be generated;
(i) a drawing object information storing process of storing the generated drawing object information, and (ii) a coordinate transformation information storing process of storing the generated coordinate transformation information, and
   a three dimensional image generating process of generating the three-dimensional image by incorporating the stored coordinate transformation information with the stored drawing object information, for said each predetermined information unit,
   characterized in that:
   said drawing object information generating process generates, in advance, the drawing object information about another or other objects that are not included in one three-dimensional image to be displayed at present, and said drawing object information storing process stores, in advance, the drawing object information that is generated in advance, and
   if another or other three-dimensional images to be displayed later includes said another or other objects, said drawing object information generating device does not re-generate the drawing object information about said another or other objects, and the drawing device generates said another or other three-dimensional images, using the drawing object information that is stored in advance.

According to the image generating method of the present invention, similarly to the case of the image generating apparatus according to the present invention mentioned above, data is divided into the coordinate transformation information and the drawing object information in order to generate an image, and each of them is generated, stored and managed by their respective generating device. On the basis of these stored and managed data, the drawing device generates a 3D image as a display image and outputs it to the display unit. In this case, handling the coordinate transformation information and the drawing object information separately and independently, and executing a batch drawing process based on these kinds of information, improve a drawing speed of the drawing device. Furthermore in the present invention, the drawing object information about another or other object(s) not included in the 3D image to be displayed at the present is generated and stored in advance, and thereby said another or other object(s) can be generated using this information generated and stored in advance, in the case that said another or other object(s) is/are included in another 3D image to be displayed later. As a result, according to the present invention, the time consuming drawing object information generation can be omitted as appropriate, resulting in the higher image generation in general.

Furthermore, in an aspect of the image generating method according to the present invention, the drawing object information generating process is for generating, in advance, the drawing object information about one or more objects, as said another or other objects, that exist around a visual range corresponding to said one three-dimensional image.

According to this aspect, since said another or other object(s) is/are one or more object(s) that exist(s) around the visual range corresponding to one 3D image, for example in a use in that the visual point or the visual range changes continuously, the possibility of said another or other object(s) being included in the 3D image to be generated in the next time or the time after is increased, resulting in the higher image generation from the drawing object information.

As mentioned above, according to the present invention, since the coordinate transformation information and the drawing object information are handled separately, the coordinate transformation information is not added to the display list. Furthermore, the preparation of the display list from the drawing object information corresponding to an area bigger than the visual range for the 3D image to be displayed at the present time allows the 3D image to be displaced only by altering the coordinate transformation information, insofar as the 3D image to be displayed later is within said area bigger than the visual range. Therefore, the time consuming display list generation for each displacement of the 3D image is eliminated, resulting in the higher image generation.

The above and other advantages and effect of the present invention will be more apparent in the following embodiments of the invention.

### Brief Description of The Drawings

FIG. 1 is a block diagram illustrating a fundamental configuration of an image generating apparatus as a first embodiment of the present invention.
FIG. 2 is a view of illustrating an internal structure of a graphics library and ability of replacement of a drawing application, in the image generating apparatus.
FIG. 3 is a,view of illustrating management of a scene object, in the image generating apparatus.
FIG. 4 is a flow chart showing a process flow of the graphics library.
FIG. 5 is a flow chart showing a process flow of the drawing device in the image generating apparatus.
FIG. 6 is a flow chart showing a process flow of the drawing application processor in the image generating apparatus.
FIG. 7 is a sequential chart showing an operation of the image generating apparatus.
FIG. 8 is an example of generated image.
FIG. 9 is an example of generated image.
FIG. 10 is a view showing a construction of a navigation system applied to the image generating apparatus according to the present invention as a second embodiment.

### The Best Modes to Carry Out The Present Invention

The embodiments according to an image generating apparatus and an image generating method as well as a computer program in the present invention are explained below with reference to the drawings. Incidentally, each of the embodiments described below is dedicated to the image generating apparatus of the present invention that is used for an on-vehicle navigation system. Nevertheless, the present invention may be suitably applied to an image generation using a personal computer, to an image generation for a TV game or to other purposes.

### (First Embodiment)

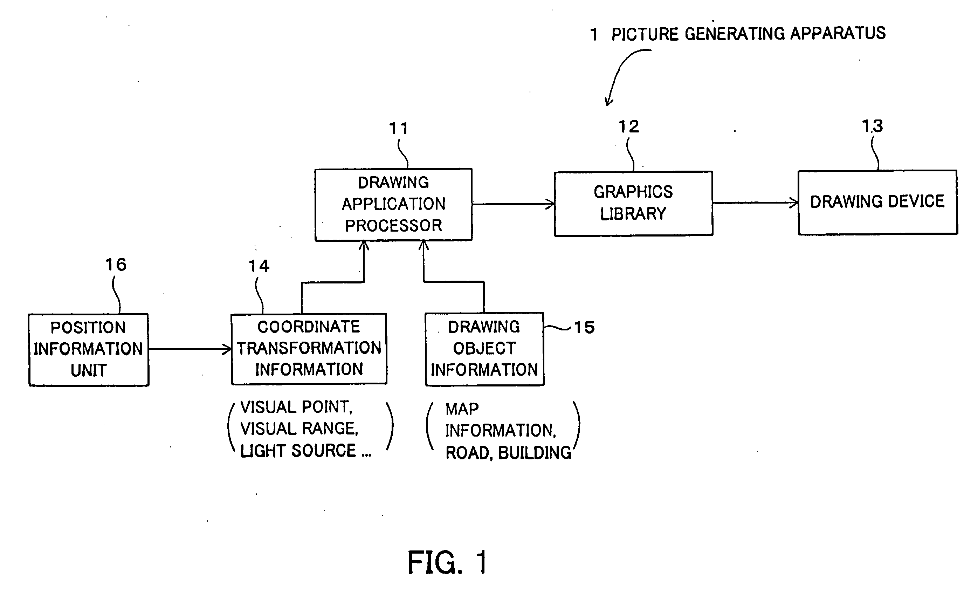

An image generating apparatus in the first embodiment is described below with reference to FIG. 1 to FIG. 9.

Firstly, the basic configuration of the image generating apparatus in this embodiment is described with reference to FIG. 1.

In FIG.1, the image generating apparatus 1 is provided with a drawing application processor 11, a graphics library 12 and a drawing device 13, wherein coordinate transformation information 14 such as a visual point, a visual range, a light source or the like and drawing object information 15 such as a road, a building, map information or the like are inputted into the drawing application processor 11. The coordinate transformation information 14 includes coordinate information from a position information device 16 or the like, and the coordinate transformation information is set up sequentially on the basis of the coordinate information. The position information device 16, which is an example of a change information supply device, may be a positioning device applied to the movable body, a program, an arithmetical unit, or a manual input device.

If it is a positioning device, a current position of the movable body is inputted at a predetermined time period or at a predetermined travel distance in accordance with the travel of the movable body. If it is a program, an arrangement for a desired display is possible. If it is an arithmetical unit, it is possible to input a coordinate corresponding to a solution obtained by inputting parameters into a state function. If it is manually operated, it is possible to input a coordinate suitable for various state during monitoring thereof.

On the other hand, the graphics library 12 and the drawing device 13 constitute together a system as a unit, which may be optionally replaced as the unit relative to the drawing application processor 11.

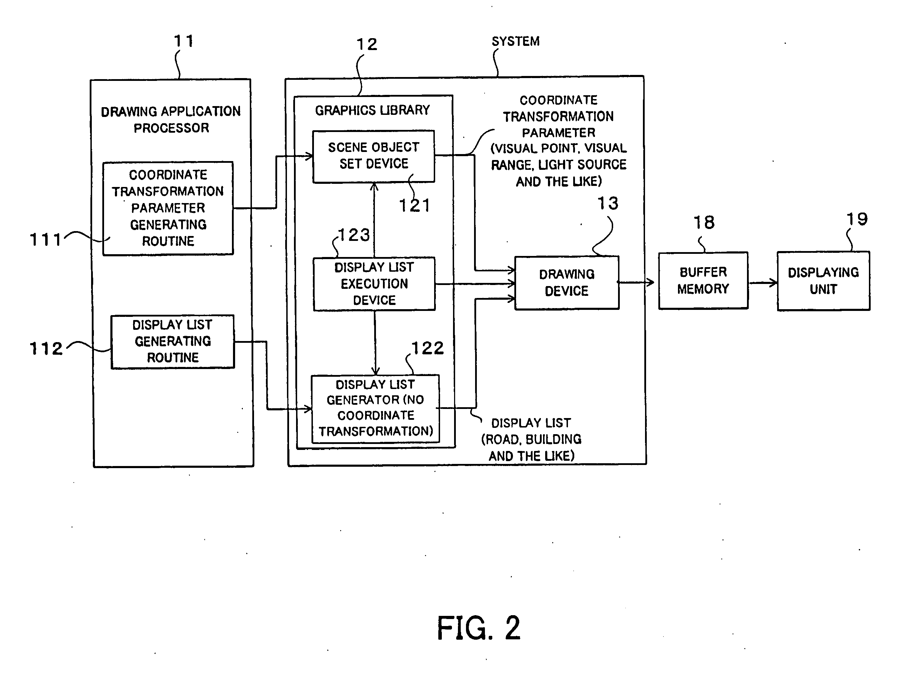

As shown in FIG.2, the drawing application processor 11 has a coordinate transformation parameter generation routine 111 and a display list generation routine 112. The coordinate transformation parameter generation routine 111 generates coordinate transformation data on the basis of the coordinate transformation information such as the visual point, the visual range, the light source or the like, which is inputted as the coordinate transformation information 14. This data is managed as a scene object in the graphics library 12. An operation of setting parameters for the scene object as well as an operation of applying the scene object to the drawing on the basis of the parameters that is already set, is executed relative to an identifier of the scene object.

On the other hand, the display list generation routine 112 generates the drawing object information from the road, the building, the map information or the like, and inputs it into the graphics library 12. This drawing object information does not include the coordinate transformation information. The coordinate transformation information is independently set as the scene object as previously discussed. In this way, the drawing object information and the coordinate transformation information are generated independently of each other, but the former is incorporated into the latter to generate the image, if needed. This allows the aforementioned replacement of the system and an improvement in the drawing speed.

Next, the graphics library 12 has a scene object set device 121, a display list preparation device 122 and a display list execution device 123.

The scene object set device 121 stores and manages the coordinate transformation information that is generated through the coordinate transformation parameter generation routine 111 in the drawing application processor 11 into the scene object corresponding to the identifier that is designated by the drawing application. The display list preparation device 122 prepares a display list that is generated through the display list generation routine 112 in the drawing application processor 11 so as to be directly and collectively (in a batch processing) executed for the higher speed drawing by the drawing device 13.

On the other hand, the display list execution device 123 controls the drawing device 13, while making the scene object set device 121 and the display list preparation device 122 send the display list and the coordinate transformation parameters, both of which are processed so as to allow the batch processing of the coordinate transformation information and the drawing object information, into the drawing device 13 to execute the drawing operation.

In this graphics library 12 also, the coordinate transformation information and the drawing object information are separately stored, and when the image is to be generated, in the drawing device 13, the coordinate transformation information are incorporated into the drawing object information for the coordinate transformation and the image generation by adding conditions such as the visual point, the visual range, the light source or the like, which are set as the scene objects. Therefore, the drawing object information stored in a single display list is formed as display list on the basis of a single coordinate system that does not depend on the visual point or the visual range.

The image that is generated at the drawing device 13 is once stored in a buffer memory 18, then inputted into the display device 19 and displayed.

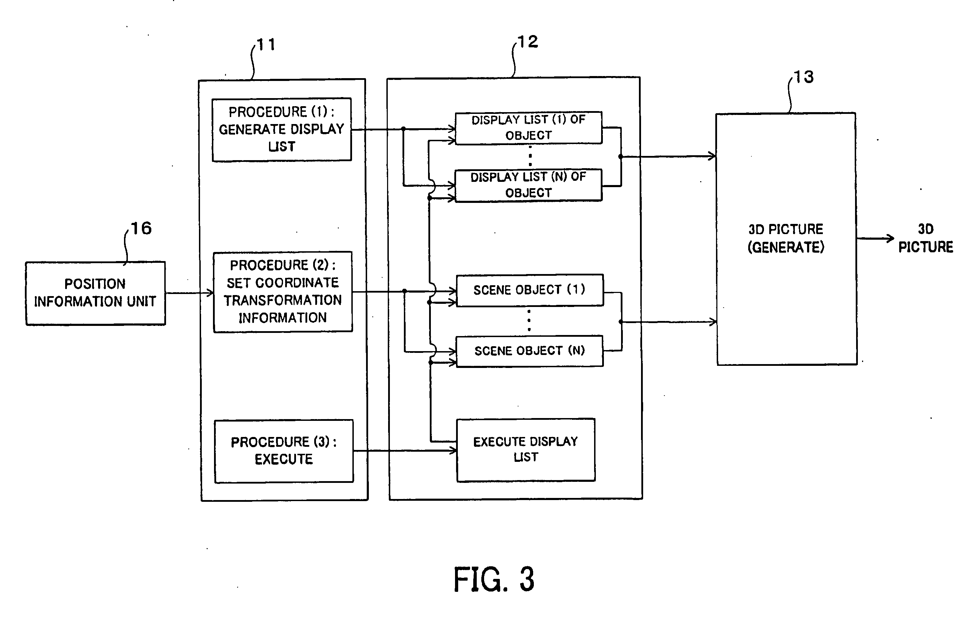

Next, referring to FIG. 3, the procedure for generating the 3D image is described below. At first, at the drawing application processor 11, a display list is generated (Procedure #1). The generated display list is stored as an object display list #1 in the graphics library 12. Next, coordinate transformation information is set (Procedure #2). The coordinate transformation information is stored in a scene object #1. Next, a command or instruction to generate the image is provided (Procedure #3). The object display list #1 and the scene object #1 in the graphics library 12 are accessed to input each data into the drawing device 13 to generate the image. Incidentally, the identifier is designated on the basis of the coordinate information from the position information device 16.

The drawing device 13 has the 3D coordinate transformation function, and thereby generates and displays the drawing object information in three dimension, such as a 3D scene ahead of the driver during the driving, on the basis of the coordinate transformation parameters that is designated by the identifiers, for example on the basis of the driver's view (visual point and visual range), the light source or the like if the vehicle is running. Relating to this, multiple display lists and multiple scene objects may be generated and stored in advance so as to generate the image from the combination of them as appropriate.

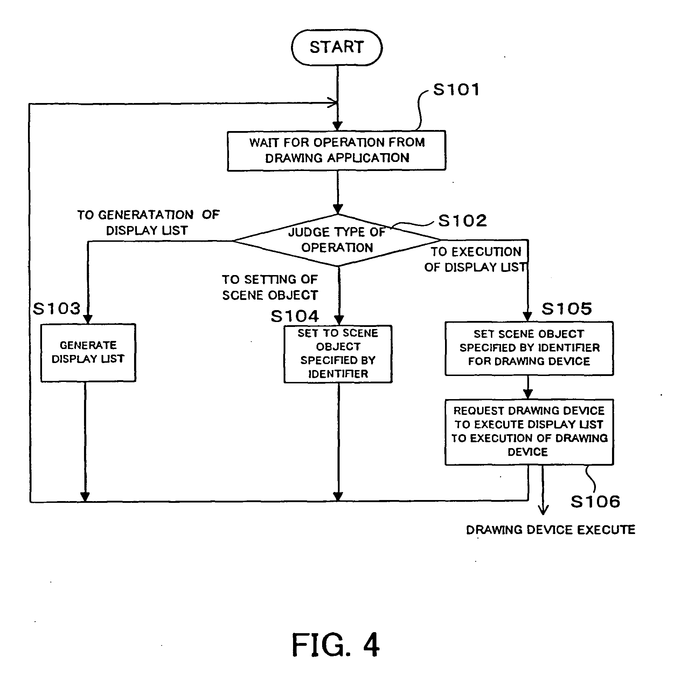

Next, the operational flow of the graphics library 12 is described below with reference to FIG.4.

At first, if there is an operation input in a waiting state that is waiting for the operation input from the drawing application processor 11 (Step S101), a type of the operation is judged (Step S102). The type of the operation in the graphics library 12 may be the display list preparation, the scene object setting or the display list execution.

If a command or instruction for the display list preparation is provided, the display list is generated on the basis of the drawing object information such as roads, buildings and the like (Step S103). Once the display list is generated, the process goes back to the Step S101 and waits for the next operation input.

As a result of the judgement at the Step S102, if the operation input is for the scene object setting, the scene object that is designated by the identifier of the coordinate transformation information, such as the driver's view (visual point and visual range), the light source or the like, is set (Step S104). Once the scene object setting is completed, the process goes back to the Step S101 again, and waits for the next operation input.

As a result of the judgement at the Step S102, if the operation input is for the display list execution, the scene object that is designated by the identifier is set for the drawing device 13 (Step S105), and a request for the display list execution is sent to the drawing device 13 (Step S106).

After that, the process goes back to the Step S101 and waits for the next operation input. The drawing device 13 executes the display lists in a batch processing to generate the image. The execution procedure is in line with the execution procedures described with reference to FIG. 3.

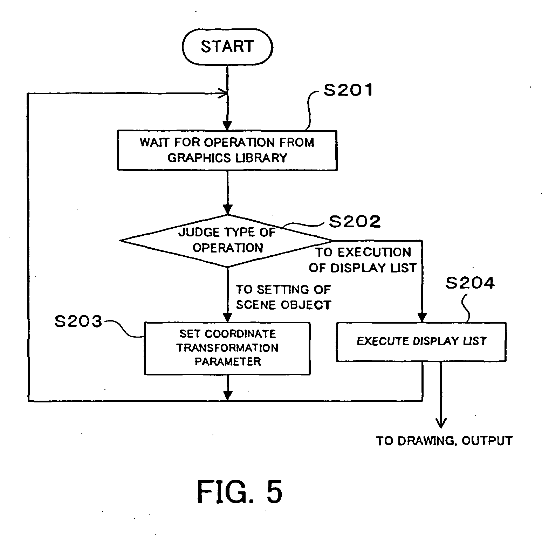

The operational flow of the drawing device 13 is described below with reference to FIG. 5.

At first, if there is an operation input in a waiting state that is waiting for the operation input from the graphics library 12 (Step S201), a type of the operation is judged (Step S202). The type of the operation may be the scene object setting and the display list execution.

If the operation input is for the scene object setting, the drawing device 13 sets the coordinate transformation parameters based on the identifiers (Step S203). Once the coordinate transformation parameter setting is completed, the process goes back to the Step S201 again and waits for the next operation input.

As a result of the judgement at the Step S202, if the operation input is for the display list execution, the image is generated, on the basis of the coordinate transformation parameters and the display list. The generated image is outputted from the drawing device 13.

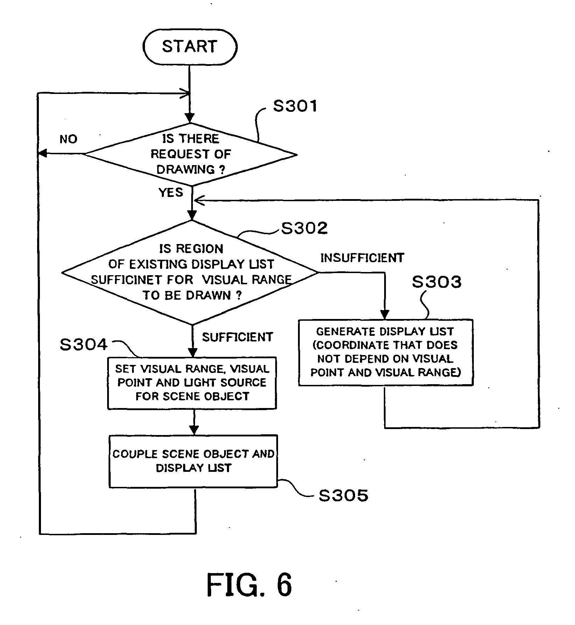

Next, with reference to FIG. 6, an operational flow of the drawing application processor 11, which is a characteristic feature of the present invention, will be discussed. That is, the following discussion is concerned in the case that an area bigger than another area actually displayed on the display device (corresponding to the visual range) is treated as the drawing object information.

Firstly, if there is a drawing request (Step S301), it is judged whether or not the area of the display list as the drawing object information that is already generated includes a full of the visual range to be displayed (Step S302). That is, it is determined whether or not the visual range information of the identifier to be executed is sufficient for the image display.

If the drawing object information is insufficient, the display list is prepared (Step S303). A range of drawing object information sufficient to the visual point or view range information is extracted to make a display list therefrom, and then the process goes back to the Step S302.

If the judgement at the Step S302 is of sufficient, the coordinate transformation information including a visual point, a visual range and a light source is assigned to the scene object (Step S304). Next, the drawing with a combination of the scene object and the display list is instructed (Step S305), and then the process goes back to the Step S301 and waits for the next drawing request.

As mentioned above, if the area of the display list is sufficient to the visual range to be displayed at the Step S302, the original display list can be used and thereby the time consuming display list preparation process can be omitted. That is, a new scene object is applied to the original display list allows generation of a desired image, and an extremely higher speed drawing.

Furthermore, with regard to the display list preparation, at the Step S303, since the display list is prepared about not only the object in the image to be generated at the present time, but also plural or multiple objects including objects that exist in an area bigger than the visual range corresponding to the image, the possibility of the judgement that it is sufficient for the drawing request at the next time or the time after is increased in the Step S302,. Then, if it is sufficient in the Step S302, the higher speed image generation is achieved by applying a new scene object to the display list. On the other hand, under the multi-task environment, the display list can be prepared in a separate task so that a preparation range is calculated in estimation and the display list is prepared with speculation, and thereby still higher image generation is achieved.

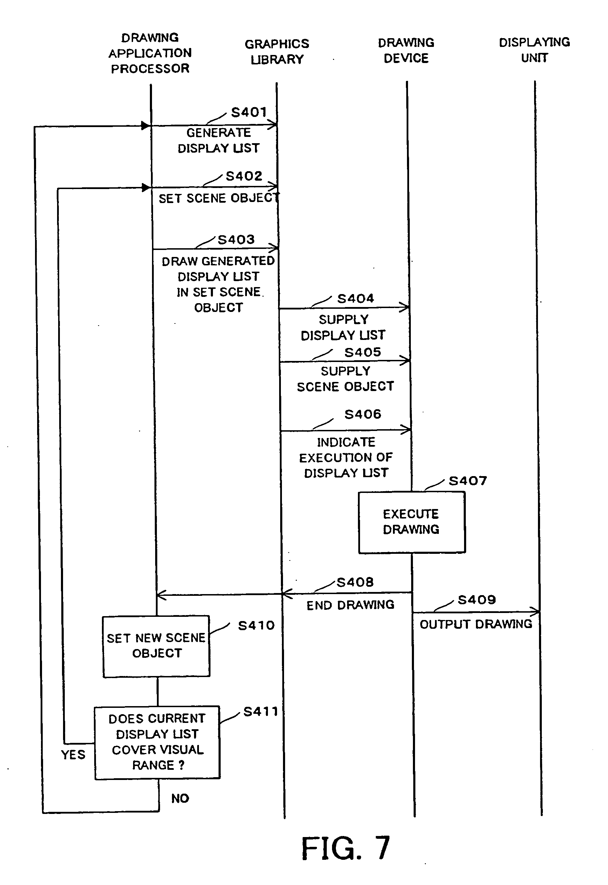

The operation of the image generating apparatus is described below in chronological order with reference to a sequence chart of FIG. 7. This sequence chart shows, in chronological order, an inter-relationship among the drawing application processor 11, the graphics library 12, the drawing device 13 and the display unit 19, in which horizontal lines are representative of the inter-relationship, while vertical lines are representative of a lapse of time in a line from the top to the bottom.

Firstly, a display list is prepared in the drawing application processor 11 and inputted into the graphics library 12 (Step S401). Next, in the drawing application processor 11, the coordinate transformation parameter, i.e. identifier is set up, and an instruction of setting up the scene object to which the identifier is added is supplied to the graphics library 12 (Step S402). Next, the drawing application processor 11 supplies an instruction of applying the set up scene object 12 to the generated display list, relative to the graphics library 12 (Step S403).

If any of these instructions is given, the graphics library supplies to the drawing device 13 the display list (Step S404), the scene object (Step S404), and instructs the execution of the display list (Step S406).

In response to the instruction, the drawing device 13 executes the display list to generate an image on the basis of the coordinate transformation parameters of the scene object (Step S407). Once the drawing is completed, the completion of the drawing is reported to the graphics library 12 and the drawing application processor 11 (Step S408), and the drawing completion processing is executed while the generated image is outputted on the display unit 19 (Step S409).

In response to the report of the drawing completion, the drawing application processor 11 sets up the next identifier (Step S410). Next it is judged whether or not the display list at the present is sufficient to cover a visual range of a new identifier (Step S411). If it is sufficient to cover the range, the display list can be used and thereby the process goes back to the Step S402 and a new drawing process is started from the scene object setting.

On the other hand, if it is not sufficient to cover the range, preparation of a new display list is required, and thereby the process goes back to the Step S401 and a new drawing processing is started from the display list preparation.

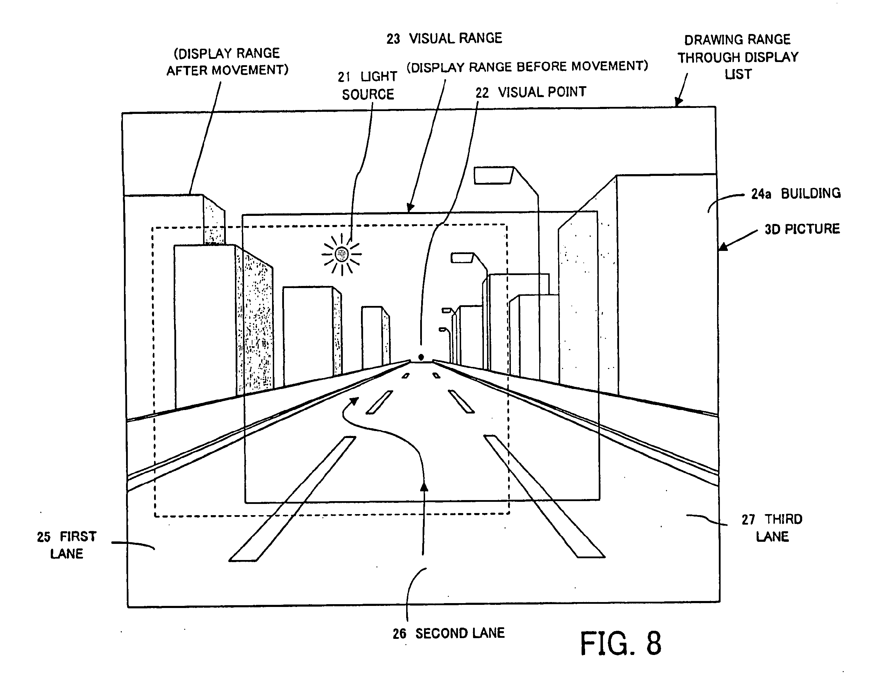

FIG.8 is an example of a display of the 3D image that is generated as mentioned above, showing a scene based on a driver's view from the inside of the vehicle that is running on a road in a town. In the figure, a light source 21, a visual point 22, a visual range 23 or the like is representative of the coordinate transformation information that is designated by the identifier to be incorporated into the scene object, while a building 24a, 24b, 24c...., a first lane 25, a second lane 26 and a third lane 27 of a road or the like is representative of the drawing object information. The light source 21 may be the sun (during the daytime), or a streetlamp (during the nighttime), whose position or lighting direction constitutes a parameter. On the other hand, the visual point 22 may be a point corresponding to the driver's visual point, allowing the driver to view the scene on the display unit as if it were a real scene around the vehicle. The visual range 23 is for defining a predetermined image range, which is suitably set for the driver.

On the other hand, the buildings 24a, 24b, 24c....., or the like is representative of the drawing object information, and the display list relating to the drawing information is adapted so as to be executed directly by the drawing device. Such drawing object information may be the information that is supplied from a map information database or the like belonged to the navigation system. Further, with regard to a format as the drawing object information, it is represented in a form employing only a coordinate system without the coordinate transformation information.

In FIG. 8, on the basis of the information from the scene object, the light source 21 (the sun in this case) is ahead of the driver, while the side of the buildings 24a, 24b, 24c,..... that faces the driver is darkly shaded. On the other hand, the coordinate transformation is executed so that the drawing object such as the building 24a, 24b, 24c,....., the first, second and third lanes 25, 26 and 27 or the like within a range that is defined by the visual range 23 is converged in perspective on the visual point 22 that is located above the second lane 26. Thereby, a 3D image is obtained.

Here, the drawing range defined from the display list is set up relative to the drawing objects in an area bigger than another area indicated by the visual range 23 (i.e. an actual display area). The actual display area is a part that is cut from the bigger area. Therefore, if the part that is cut from the bigger area is within the display range defined by the display list, the same display list can be used to generate an image about the moved visual point.

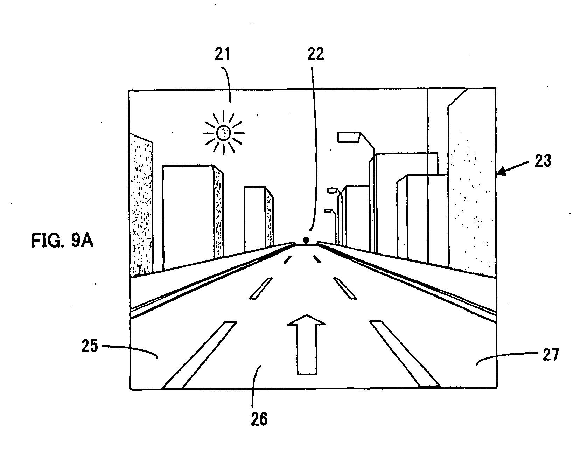

Nevertheless, a 3D image conforming to the visual point cannot be obtained by simply cut out only the area conforming to the visual range. That is, an image that is expected to change in accordance with the movement of the visual point can not be displayed in a technique, like as the aforementioned conventional and simple 2D image display technique, i.e. storing the image information about an area bigger than the actual display area into a large frame buffer, and promptly displaying the image of the moved display area within the large frame buffer. FIG. 9 (a) to FIG. 9 (c) illustrate 3D images conformed to the visual point position, addressing the aforementioned displacement, in a technique according to the present invention.

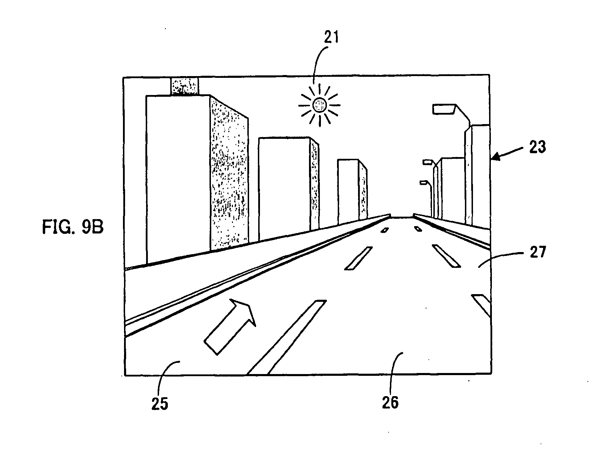

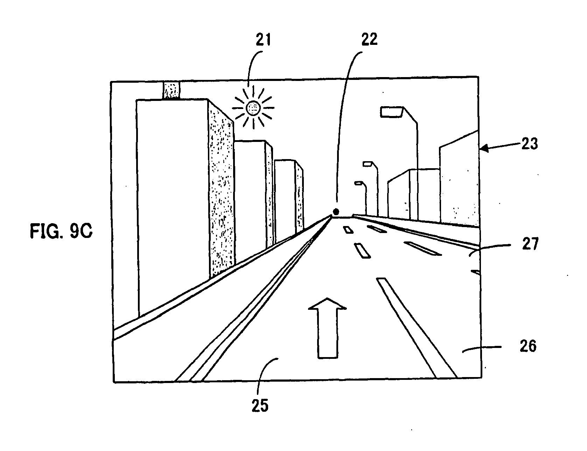

Firstly, FIG. 9 (a) illustrates a 3D image in the case that the visual point 22 is above the second lane 26 while the driver drives on the second lane 26. It corresponds to a center area enclosed with a solid line in FIG. 8. Next, in the case that the driver changes the lane to the first lane 25, if an area enclosed with a broken line in FIG. 8 is simply cut out, the obtained image is deviated from the driver's visual point, as shown in FIG. 9 (b). FIG. 9 (c) illustrates an image that is obtained by applying a new identifier to the display list generated in advance, as mentioned above. A 3D image is obtained with the visual point 22 being above the first lane 25 and at the center of the display screen.

Furthermore, a smokestack 28 that was out of sight in FIG. 9 (a) because of obstruction by a building toward the front as seen from the driver is displayed in FIG. 9 (c). Particularly in this embodiment, since the display list about the smokestack 28 is also prepared in advance when the image as shown in FIG. 9 (a) is generated, switching from FIG. 9 (a) to FIG. 9 (c) can be promptly performed.

Incidentally, in FIG. 9 (a) to FIG. 9 (c), an image generation before and after a lane change is discussed, nevertheless, also in the case that a building that was out of sight because of obstruction by another building or the like otherwise because of its distance from the driver is newly displayed, in accordance with change of the visual point of the driver who drives the vehicle continuously without changing the lane, the prompt image generation is possible by preparing the display list in advance as well in the aforementioned case.

Incidentally, the current position of the vehicle, which is used as the coordinate transformation information, may be obtained from position information determined with a GPS positioning system or a self-contained positioning system (stand alone positioning system). Furthermore, the time consuming display list preparation can be omitted, which is suitable for the image generation that is viewed by the driver of the movable body, including vehicles, whose position changes at high speed.

As discussed above, owing to handling separately the drawing object information and the coordinate transformation information, utilizing a display list commonly within a predetermined range, and preparing a display list in advance that is not required to generate an image at present but may be required in future, an image generating apparatus allowing a high speed 3D image generation can be achieved.

### (Second Embodiment)

Next, an embodiment wherein the aforementioned image generating apparatus is applied to a navigation system for a movable body is discussed below. As discussed below in detail, various functions of the navigation system are closely related to the image generating apparatus and therefore incorporated into the same. Incidentally, the configuration and operation of the image generating apparatus in itself are of those mentioned above, for which the explanation is not repeated, but the explanation mentioned above is to be referred as appropriate.

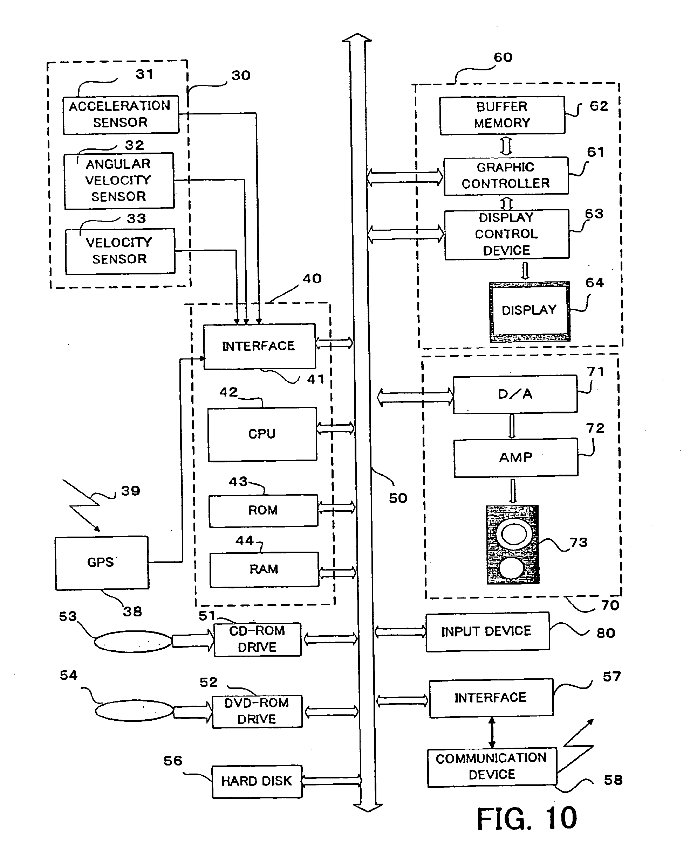

Firstly, the navigation system that is applied to the present embodiment is described in its outline, with reference to FIG. 10.

The navigation system is provided with a self-contained positioning apparatus 30, a GPS receiver 38, a system controller 40, an input/output (I/O) circuit 41, a CD-ROM drive 51, a DVD-ROM drive 52, a hard disk device (HDD) 56, a wireless communication device 58, a display unit 60, an audio output unit 70, an input device 80 and an external interface (I/F) unit 81, all of which are respectively connected to a bus line 50 for transferring control data and process data.

The self-contained positioning apparatus 30 is provided with an acceleration sensor 31, an angular rate sensor 32 and a velocity sensor 33. The acceleration sensor 31, which may be made of a piezoelectric element, outputs an acceleration data that is obtained by detecting an acceleration of a vehicle. The angular rate sensor 32, which may be made of a vibratory gyroscope, outputs an angular rate data and a relative azimuth data of a vehicle that is obtained by detecting the angular rate of the vehicle when a direction of the vehicle is changed. The velocity sensor 33 detects a rotation of a vehicle mechanically, magnetically or optically and outputs a pulse signal having a pulse number that corresponds to a velocity of the vehicle, every time when the rotation of a predetermined angle is detected about a vehicle shaft.

The GPS receiver 38 has a known configuration provided with a plane polarization non-directional reception antenna (heimen-henpa-mushikousei-jushin-antena) and a high frequency reception processor, and further a digital signal processor (DSP) or a micro processor unit (MPU), a V-RAM, a memory and so on. The GPS receiver 38 is arranged to receive electric waves from at least three GPS satellites orbiting around the earth, for a position calculation and a travel velocity azimuth calculation, through a spectral back-diffusionspread spectrum demodulation (supekutoru-gyaku-kakusan), a distance measurement, a Doppler measurement and an orbit data processing, and output the resultant absolute position information of the receive point (a vehicle running point) continuously or consecutively from the I/O circuit 41 into the bus line 50, so that the system controller 40 takes the absolute position information to display on the road map of the screen.

The system controller 40, which is provided with a CPU 42, a ROM 43 (that is a non-volatile solid memory device) and a working RAM 44, exchanges data with each unit or device that is connected to the bus line 50. The processing control through this data exchange is executed by a control program and a boot program that are stored in the ROM 43. The RAM 44 temporarily stores setting information and the like for changing a map display (changing between a whole map display and an area map display) inter alia in accordance with the user's operation via the input device 80.

The CD-ROM drive 51 and the DVD-ROM drive 52 read and output each of map database information (e.g. various road information such as the number of lanes, a road width or the like in the map information (map folio)) from the CD-ROM 53 and the DVD-ROM 54 in which the map database information is stored respectively.

The HDD 56 is operative to store the map (image) data that is read at the CD-ROM drive 51 or the DVD-ROM drive 52, and to read it at any time point later than this storing process. Further, the HDD 56 is also operative to store audio data or video data that is read from the CD-ROM drive 51 or the DVD-ROM drive 52. Thereby, for example, audio output or video output is allowed by reading the audio data or video data that is stored in the HDD 56, while the navigation processing is executed by reading the map data from the CD-ROM 53 or the DVD-ROM 54. Alternatively, the navigation processing is allowed by reading the map data that is stored in the HDD 56, while the audio output or video output is executed by reading the audio data or video data from the CD-ROM 53 or the DVD-ROM 54.

The display unit 60 displays various processing data on the scene under control of the system controller 40. With regard to the display unit 60, a graphic controller 61 disposed therein controls each part of the display unit 60, on the basis of the control data that is transferred from the CPU 42 via the bus line 50. Additionally, a buffer memory 62 such as V-RAM temporarily stores image information for a real-time display. Further, a display controller 63 controls the display processing to display the image data, which is outputted from the graphic controller 61, on the display member 64. This display member 64 may be disposed near a front panel in the vehicle.

With regard to the audio output unit 70, a D/A converter 71 converts the audio signal that is transmitted via the bus line 50 under control of the system controller 40 into the digital signal, while a variable amplifier (AMP) 72 variably amplifies the analog signal that is outputted from the D/A converter 72 to output to a speaker 73, from which the sound is outputted.

The input device 80 is provided with keys, switches, buttons, remote controllers and audio input devices, for inputting various commands or data. The input device 80 is disposed around a display 64 or a front panel of a body of the on-vehicle type electronic equipment that is mounted in the vehicle.

Here, in the case that the image generating apparatus according to the present invention is applied to a navigation system, it is required to appropriately display an image in agreement with a drive route. That is, it is desirable to display an image in three dimensions that is seen from the driver who is driving the vehicle on the road. Moreover, it is useful for the safety to inform the driver an image around a coming corner or a sight ahead of an unclear passage, which is displaying in three dimensions. Furthermore, it is required to display various superimposed messages on each image.

Therefore, the image generating apparatus according to the present invention can provide a remarkably effective navigation system by forming an integral system incorporating various devices and functions of a navigation system.

Next, incorporating various devices and functions of the navigation system with the image generating apparatus is discussed, with regard to components.

The image generating apparatus captures separately the coordinate transformation information including the visual point, the visual range, the light source and the like, and the drawing object information including roads, buildings and the like at the drawing application processor 11, and then generates data as drawing data from each of these information at the graphics library 12, and then generates an image from these individual information at the drawing device 13, as mentioned above.

Firstly, the drawing object information is map information including roads and buildings available from a map database contained in the navigation system. The map information is stored in the CD-ROM 53 as well as DVD-ROM 54 which is readable using the CD-ROM drive 51 as well as DVD-ROM drive 52. Alternatively, the map information may be available from a predetermined web site via a communication device 58 to store into or use from the HDD 56. Alternatively, the map information of the drive route that is read using the CD-ROM drive 51 or the DVD-ROM drive 52 may be stored and then read at any desired time point later than this storing. This operation may be executed when a drive plan is made up.

The map information mentioned above, which is divided into multiple areas and designated by a coordinate system for each area, is transformed into only one coordinate system independent of the position of the visual point or the visual range by the display list generating routine 112 of the drawing application processor 11 in the image generating apparatus, in order to send an instruction to the display list preparation device 122 in the graphics library 12, where the map information is listed into the display list.

Next, relating to the coordinate transformation information that is involved in the image generating apparatus, such as the visual point, the visual range, the light source and so on, it is required to know a current position of the vehicle during the driving, which is determined from a self-contained positioning apparatus 30 or a GPS receiver 38 of the navigation system. From a comparison of a determined current position with the map information, a travel direction of the vehicle, and an appropriate visual point and visual range are determined. The visual point and visual range may be positioned at a predetermined position or range, or may be set manually.

On the other hand, once the travel direction of the vehicle and the present time is known, the bearing of the sun can be determined taking account of the seasonal factor, and a position of the light source can also be determined by assuming the bearing of the sun as the light source.

Alternatively, a change of the shade from sunrise to sunset in the scene can be viewed, by incorporating the coordinate transformation information into the drawing object information with a condition of time that passes from moment to moment. Particularly, in the case that a 3D image corresponding to a scene is to be displayed when the vehicle is running continuously on a road, the 3D image can be displayed efficiently and continuously by changing the coordinate transformation information in accordance with the driving while the drawing object information is fixed, as discussed above.

As mentioned above, the scene object as the coordinate transformation information can be determined by using the function of the navigation system, while the drawing object information can be determined by using the map information. Therefore, a 3D image can be generated from both the coordinate transformation information and the drawing object information, which are independent of each other, and the 3D image is directed to the display unit 60 of the navigation system, where the graphics controller 61 stores it in the buffer memory 62 that employs the V-RAM or the like, and further the 3D image is read from the buffer memory 62 to be displayed on the display 64 via the display controller 63.

Hereinabove, the image generating apparatus of the present invention has been discussed in the case that it is applied to the navigation system, nevertheless, it is not limited to this embodiment, and also suitable for an image generation in a personal computer, a work station, a mobile, a cell phone and the like, an image generation in a TV game, an arcade game, a mobile game and the like, and an image generation in a drive simulation device or a training device for various vehicles such as a automobile, a motorcycle, a plane, a helicopter, a rocket, a ship and the like.

Furthermore, the present invention is not limited to the aforementioned embodiments but may be changed as appropriate within the scope of the appended claims.

### Industrial Applicability

The present invention is applicable to an image generation in a navigation system, a personal computer, a cell phone and the like, an image generation in a TV game, a mobile game and the like, and an image generation in a drive simulation device or a training device for various vehicles such as a automobile, a plane, a ship and the like.

## Claims

1. An image generating apparatus (1) having: a drawing device (13), a drawing application processor (11) and a graphics library (12) that allows said drawing device (13) to generate a three-dimensional image,
said drawing application processor (11) comprising
i) a drawing object information generating device (112) which is adapted to generate drawing object information to generate an image for each object in a respective one of at least one single coordinate systems each of which is for respective one predetermined information unit, on the basis of three-dimensional coordinate information to be included in a three-dimensional image to be generated, wherein the object is an object to be depicted, and
ii) a coordinate transformation information generating device (111) which is adapted to generate coordinate transformation information to define at least a visual point and a visual range when the three-dimensional image is to be generated,
said graphics library (12) comprising
i) a drawing object information storing device (122) which is adapted to store the generated drawing object information, and
ii) a coordinate transformation information storing device (121) which is adapted to store the generated coordinate transformation information, and
said drawing device (13) being adapted to generate the three-dimensional image by incorporating the stored coordinate transformation information with the stored drawing object information, for said each predetermined information unit,
said drawing object information generating device (112) being adapted to generate in advance, the drawing object information about another or other objects that are not included in a three-dimensional image to be displayed at present, and said drawing object information storing device (122) being adapted to store, in advance, the drawing object information that is generated in advance, and
if another or other three-dimensional images to be displayed later includes said another or other objects, said drawing object information generating device (112) being adapted not to re-generate the drawing object information about said another or other objects, and the drawing device (13) being adapted to generate said another or other three-dimensional images, using the drawing object information that is stored in advance.

2. The image generating apparatus (1) according to claim 1, **characterized in that** said drawing object information generating device (112) is adapted to generate, in advance, the drawing object information about one or more objects, as said another or other objects, that exist around a visual range corresponding to said one three-dimensional image.

3. The image generating apparatus (1) according to claim 2, **characterized in that** said drawing object information generating device (112) is adapted to generate, in advance, the drawing object information about one or more objects, as said another or other objects, that exist in an area extending behind the visual range as seen from the visual point.

4. The image generating apparatus (1) according to claim 1, **characterized in that** said apparatus (1) further comprises a position information supply device (16) which is adapted to supply position information, which indicates a current position of the image generating apparatus, at a predetermined time period or at a predetermined travel distance, and
said coordinate transformation information generating device (111) is adapted to generate the coordinate transformation information in accordance with the supplied position information.

5. The image generating apparatus (1) according to claim 1, **characterized in that** every time when the coordinate transformation information generated by the said coordinate transformation information generating device (111) changes, the drawing device (13) is adapted to generate an image by incorporating the changed coordinate transformation information with the drawing object information.

6. The image generating apparatus (1) according to claim 1, **characterized in that** said drawing application processor (11) is adapted to :
prepare a list of the drawing object information about an area bigger than another area corresponding to said one three-dimensional image;
set up the coordinate transformation information; and
instruct an execution of a drawing in said drawing device.

7. The image generating apparatus (1) according to claim 1, **characterized in that** said graphics library (12) is adapted to :
manage the coordinate transformation information;
manage the drawing object information; and
control said drawing device (13).

8. The image generating apparatus (1) according to claim 1, **characterized in that** said drawing application processor (11) comprises a function for being supplied with map information including the three-dimensional coordinate information from a map database incorporated within a navigation system.

9. The image generating apparatus (1) according to claim 8, **characterized in that** the visual point is determined in accordance with a current position obtained with an aid of a movable body positioning system of the navigation system.

10. The image generating apparatus (1) according to any one of claims 1 to 9, **characterized in that** said drawing device (13) is adapted to generate an image in perspective as the three-dimensional image.

11. The image generating apparatus (1) according to any one of claims 1 to 9, **characterized in that** the coordinate transformation information includes information to define a light source, in addition to the information to define the visual point and the visual range.

12. The image generating apparatus (1) according to any one of claims 1 to 9, **characterized in that** the visual point is set on the basis of a visual point of a driver of a vehicle.

13. The image generating apparatus according to any one of claims 1 to 9, **characterized in that** the visual range is set on the basis of a visual range of a driver of a vehicle.

14. The image generating apparatus (1) according to any one of claims 1 to 9, **characterized in that** the visual point in the three-dimensional image is set at a center of an image display device incorporated within a navigation system.

15. The image generating apparatus (1) according to any one of claims 1 to 9, **characterized in that** said drawing device (13) is adapted to generate a three-dimensional image by superimposing a plurality of partial frame images that are to be generated on the basis of the plurality of drawing object information generated and stored for each object.

16. The image generating apparatus (1) according to claim 15, **characterized in that** said image generating apparatus (1) further comprises a frame butter (18) for temporarily storing the plurality of partial frame images.

17. The image generating apparatus (1) according to any one of claims 1 to 9, **characterized in that** said drawing application processor (11) is adapted to re-generate the coordinate transformation information with the aid of said coordinate transformation information generating device (111), while the drawing object information is maintained for an object commonly included in two three-dimensional images in series which differ sequentially from each other with the course of time.

18. The image generating apparatus (1) according to any one of claims 1 to 9, **characterized in that** said drawing application processor (11) and said graphics library (12) are adapted to generate and store the drawing object information and the coordinate transformation information for the plurality of three-dimensional images in a multitask operation.

19. An electronic equipment **characterized in that** said electronic equipment comprises:
the image generating apparatus (1) according to claim 1;
an information source from which the three-dimensional information is supplied to said drawing application processor (11); and
a display device (64) for visually outputting the three-dimensional image that is generated by said drawing device (13).

20. An image generating method comprising:
i) a drawing object information generating process of generating drawing object information to generate an image for each object in a respective one of at least one single coordinate systems each of which is for respective one predetermined information unit, on the basis of three-dimensional coordinate information to be included in a three-dimensional image to be generated, wherein the object is an object to be depicted and
ii) a coordinate transformation information generating process of generating coordinate transformation information to define at least a visual point and a visual range when the three-dimensional image is to be generated;
iii) a drawing object information storing process of storing the generated drawing object information, and
iv) a coordinate transformation information storing process of storing the generated coordinate transformation information, and
a three dimensional image generating process of generating the three-dimensional image by incorporating the stored coordinate transformation information with the stored drawing object information, for said each predetermined information unit,
said drawing object information generating process generating, in advance, the drawing object information about another or other objects that are not included in one three-dimensional image to be displayed at present, and said drawing object information storing process storing, in advance, the drawing object information that is generated in advance,and
if another or other three-dimensional images to be displayed later includes said another or other objects, said drawing object information generating device does not re-generate the drawing object information about said another or other objects, and the drawing device generates said another or other three-dimensional images, using the drawing object information that is stored in advance.

21. The image generating method according to claim 20, **characterized in that** said drawing object information generating process is for generating, in advance, the drawing object information about one or more objects, as said another or other objects, that exist around a visual range corresponding to said one three-dimensional image.

22. A computer program that makes a computer perform the drawing object information generating process, the coordinate transformation information generating process, the drawing object information storing process and the coordinate transformation information storing process of the image generating method according to claim 20

## Patentansprüche

1. Bilderzeugungsvorrichtung (1) mit: einer Zeichnungseinrichtung (13), einem Zeichnungsanwendungsprozessor (11) und einer Grafikbibliothek (12), die es der genannten Zeichnungseinrichtung (13) ermöglicht, ein dreidimensionales Bild zu erzeugen,
wobei der genannte Zeichnungsanwendungsprozessor (11) Folgendes umfasst:
i) eine Einrichtung zum Erzeugen von Zeichnungsgegenstandsinformationen (112), die dazu angepasst ist, Zeichnungsgegenstandsinformationen zu erzeugen, um basierend auf in ein zu erzeugendes dreidimensionales Bild einzubeziehenden dreidimensionalen Koordinateninformationen, ein Bild für jeden Gegenstand in einem jeweiligen von mindestens einem einzelnen Koordinatensystemen zu erzeugen, von denen jedes für jeweils eine vorherbestimmte Informationseinheit vorgesehen ist, wobei es sich bei dem Gegenstand um einen abzubildenden Gegenstand handelt, und
ii) eine Einrichtung zum Erzeugen von Koordinatentransformationsinformationen (111), die dazu angepasst ist, Koordinatentransformationsinformationen zu erzeugen, um mindestens einen sichtbaren Punkt und einen sichtbaren Bereich zu definieren, wenn das dreidimensionale Bild erzeugt werden soll,
wobei die genannte Grafikbibliothek (12) Folgendes umfasst:
i) eine Einrichtung zum Speichern von Zeichnungsgegenstandsinformationen (122), die dazu angepasst ist, die erzeugen Zeichnungsgegenstandsinformationen zu speichern, und
ii) eine Einrichtung zum Speichern von Koordinatentransformationsinformationen (121), die dazu angepasst ist, die erzeugen Koordinatentransformationsinformationen zu speichern, und
wobei die genannte Zeichnungseinrichtung (13) dazu angepasst ist, das dreidimensionale Bild durch Integrieren der gespeicherten Koordinatentransformationsinformationen mit den gespeicherten Zeichnungsgegenstandsinformationen für die genannte jede vorherbestimmte Informationseinheit zu erzeugen,
wobei die genannte Einrichtung zum Erzeugen von Zeichnungsgegenstandsinformationen (112) dazu angepasst ist, die Zeichnungsgegenstandsinformationen über einen anderen oder andere Gegenstände, die nicht in ein gegenwärtig anzuzeigendes dreidimensionales Bild einbezogen sind, im Voraus zu erzeugen und die genannte Einrichtung zum Speichern von Zeichnungsgegenstandsinformationen (122) dazu angepasst ist, die im Voraus erzeugten Zeichnungsgegenstandsinformationen im Voraus zu speichern, und
wenn ein anderes oder andere anzuzeigende dreidimensionale Bilder später den genannten anderen bzw. die genannten anderen Gegenstände einbeziehen, die genannte Einrichtung zum Erzeugen von Zeichnungsgegenstandsinformationen (112) dazu angepasst ist, die Zeichnungsgegenstandsinformationen über den genannten anderen bzw. die genannten anderen Gegenstände nicht erneut zu erzeugen und die Zeichnungseinrichtung (13) dazu angepasst ist, das genannte andere bzw. die genannten andern dreidimensionalen Bilder unter Verwendung der im Voraus gespeicherten Zeichnungsgegenstandsinformationen zu erzeugen.

2. Bilderzeugungsvorrichtung (1) nach Anspruch 1, **dadurch gekennzeichnet, dass** die genannte Einrichtung zum Erzeugen von Zeichnungsgegenstandsinformationen (112) dazu angepasst ist, die Zeichnungsgegenstandsinformationen über einen oder mehrere Gegenstände als den genannten anderen bzw. die genannten anderen Gegenstände, die um einen dem genannten dreidimensionalen Bild entsprechenden sichtbaren Bereich existieren, im Voraus zu erzeugen.

3. Bilderzeugungsvorrichtung (1) nach Anspruch 2, **dadurch gekennzeichnet, dass** die genannte Einrichtung zum Erzeugen von Zeichnungsgegenstandsinformationen (112) dazu angepasst ist, die Zeichnungsgegenstandsinformationen über einen oder mehrere Gegenstände als den genannten anderen bzw. die genannten anderen Gegenstände, die in einem sich hinter dem sichtbaren Bereich bei Betrachtung von dem sichtbaren Punkt erstreckenden Gebiet existieren, im Voraus zu erzeugen.

4. Bilderzeugungsvorrichtung (1) nach Anspruch 1, **dadurch gekennzeichnet, dass** die genannte Vorrichtung (1) weiter eine Einrichtung zum Liefern von Positionsinformationen (16) umfasst, die dazu angepasst ist, Positionsinformationen zu liefern, die eine aktuelle Position der Bilderzeugungsvorrichtung zu einem vorherbestimmten Zeitraum oder bei einer vorherbestimmten Fahrstrecke angeben,
wobei die genannte Einrichtung zum Erzeugen von Koordinatentransformationsinformationen (111) dazu angepasst ist, die Koordinatentransformationsinformationen gemäß den gelieferten Positionsinformationen zu erzeugen.

5. Bilderzeugungsvorrichtung (1) nach Anspruch 1, **dadurch gekennzeichnet, dass** jedes Mal, wenn sich die von der genannten Einrichtung zum Erzeugen von Koordinatentransformationsinformationen (111) erzeugten Koordinatentransformationsinformationen ändern, die Zeichnungseinrichtung (13) dazu angepasst ist, durch Integrieren der geänderten Koordinatentransformationsinformationen mit den Zeichnungsgegenstandsinformationen ein Bild zu erzeugen.

6. Bilderzeugungsvorrichtung (1) nach Anspruch 1, **dadurch gekennzeichnet, dass** der genannte Zeichnungsanwendungsprozessor (11) dazu angepasst ist:
eine Liste der Zeichnungsgegenstandsinformationen über ein Gebiet zu erstellen, das größer ist als ein anderes Gebiet, das dem genannten einen dreidimensionalen Bild entspricht;
die Koordinatentransformationsinformationen einzurichten; und
eine Ausführung einer Zeichnung in der genannten Zeichnungseinrichtung anzuweisen.

7. Bilderzeugungsvorrichtung (1) nach Anspruch 1, **dadurch gekennzeichnet, dass** die genannte Grafikbibliothek (12) dazu angepasst ist:
die Koordinatentransformationsinformationen zu verwalten;
die Zeichnungsgegenstandsinformationen zu verwalten; und
die genannte Zeichnungseinrichtung (13) zu steuern.

8. Bilderzeugungsvorrichtung (1) nach Anspruch 1, **dadurch gekennzeichnet, dass** der genannte Zeichnungsanwendungsprozessor (11) eine Funktion dafür umfasst, von einer in einem Navigationssystem integrierten Datenbank mit die dreidimensionalen Koordinateninformationen einbeziehenden Karteninformationen versorgt zu werden.

9. Bilderzeugungsvorrichtung (1) nach Anspruch 8, **dadurch gekennzeichnet, dass** der sichtbare Punkt gemäß einer aktuellen Position bestimmt wird, die mit Hilfe eines Positionsbestimmungssystems des Navigationssystems für einen beweglichen Körper erhalten wird.

10. Bilderzeugungsvorrichtung (1) nach einem der Ansprüche 1 bis 9, **dadurch gekennzeichnet, dass** die genannte Zeichnungseinrichtung (13) dazu angepasst ist, ein perspektivisches Bild als das dreidimensionale Bild zu erzeugen.

11. Bilderzeugungsvorrichtung (1) nach einem der Ansprüche 1 bis 9, **dadurch gekennzeichnet, dass** die Koordinatentransformationsinformationen, zusätzlich zu den Informationen zum Definieren des sichtbaren Punkts und des sichtbaren Bereichs, Informationen zum Definieren einer Lichtquelle einbeziehen.

12. Bilderzeugungsvorrichtung (1) nach einem der Ansprühe 1 bis 9, **dadurch gekennzeichnet, dass** der sichtbare Punkt basierend auf einem sichtbaren Punkt eines Fahrers eines Fahrzeugs gesetzt wird.

13. Bilderzeugungsvorrichtung (1) nach einem der Ansprühe 1 bis 9, **dadurch gekennzeichnet, dass** der sichtbare Bereich basierend auf einem sichtbaren Bereich eines Fahrers eines Fahrzeugs gesetzt wird.

14. Bilderzeugungsvorrichtung (1) nach einem der Ansprüche 1 bis 9, **dadurch gekennzeichnet, dass** der sichtbare Punkt in dem dreidimensionalen Bild in einer Mitte einer in einem Navigationssystem integrierten Bildanzeigeeinrichtung gesetzt ist.

15. Bilderzeugungsvorrichtung (1) nach einem der Ansprüche 1 bis 9, **dadurch gekennzeichnet, dass** die Zeichnungseinrichtung (13) dazu angepasst ist, ein dreidimensionales Bild durch Überlagern mehrerer Teileinzelbilder zu erzeugen, die basierend auf den mehreren für jeden Gegenstand erzeugten und gespeicherten Zeichnungsgegenstandsinformationen zu erzeugen sind.

16. Bilderzeugungsvorrichtung (1) nach Anspruch 15, **dadurch gekennzeichnet, dass** die genannte Bilderzeugungsvorrichtung (1) weiter einen Einzelbildpufferspeicher (18) zum vorübergehenden Speichern der mehreren Teileinzelbilder umfasst.

17. Bilderzeugungsvorrichtung (1) nach einem der Ansprüche 1 bis 9, **dadurch gekennzeichnet, dass** der genannte Zeichnungsanwendungsprozessor (11) dazu angepasst ist, die Koordinatentransformationsinformationen mit Hilfe der genannten Einrichtung zum Erzeugen von Koordinatentransformationsinformationen (111) erneut zu erzeugen, während die Zeichnungsgegenstandsinformationen für einen Gegenstand beibehalten werden, der in zwei aufeinanderfolgenden dreidimensionalen Bildern gemeinsam einbezogen ist, die sich im Verlauf der Zeit der Reihe nach unterscheiden.

18. Bilderzeugungsvorrichtung (1) nach einem der Ansprüche 1 bis 9, **dadurch gekennzeichnet, dass** der genannte Zeichnungsanwendungsprozessor (11) und die genannte Grafikbibliothek (12) dazu angepasst sind, die Zeichnungsgegenstandsinformationen und die Koordinatentransformationsinformationen für die mehreren dreidimensionalen Bilder in einem Multitask-Vorgang zu erzeugen und zu speichern.

19. Elektronisches Gerät, **dadurch gekennzeichnet, dass** das genannte elektronische Gerät Folgendes umfasst:
die Bilderzeugungsvorrichtung (1) nach Anspruch 1;
eine Informationsquelle, von der die dreidimensionalen Informationen an den genannten Zeichnungsanwendungsprozessor (11) geliefert werden; und
eine Anzeigeeinrichtung (64) zum sichtbaren Ausgeben des von der genannten Zeichnungseinrichtung (13) erzeugten dreidimensionalen Bilds.

20. Bilderzeugungsverfahren, das Folgendes umfasst:
i) einen Prozess zum Erzeugen von Zeichnungsgegenstandsinformationen zum Erzeugen von Zeichnungsgegenstandsinformationen, um basierend auf in ein zu erzeugendes dreidimensionales Bild einzubeziehenden Koordinateninformationen ein Bild für jeden Gegenstand in einem jeweiligen von mindestens einem einzelnen Koordinatensystemen zu erzeugen, von denen jedes für jeweils eine vorherbestimmte Informationseinheit vorgesehen ist, wobei es sich bei dem Gegenstand um einen abzubildenden Gegenstand handelt, und
ii) einen Prozess zum Erzeugen von Koordinatentransformationsinformationen zum Erzeugen von Koordinatentransformationsinformationen, um mindestens einen sichtbaren Punkt und einen sichtbaren Bereich zu definieren, wenn das dreidimensionale Bild erzeugt werden soll;
iii) einen Prozess zum Speichern von Zeichnungsgegenstandsinformationen zum Speichern der erzeugten Zeichnungsgegenstandsinformationen, und
iv) einen Prozess zum Speichern von Koordinatentransformationsinformationen zum Speichern der erzeugten Koordinatentransformationsinformationen, und
einen Prozess zum Erzeugen eines dreidimensionalen Bilds zum Erzeugen des dreidimensionalen Bilds durch Integrieren der gespeicherten Koordinatentransformationsinformationen mit den gespeicherten Zeichnungsgegenstandsinformationen für die genannte jede Informationseinheit,
wobei der genannte Prozess zum Erzeugen von Zeichnungsgegenstandsinformationen die Zeichnungsgegenstandsinformationen über einen anderen oder andere Gegenstände, die gegenwärtig nicht in ein anzuzeigendes dreidimensionales Bild einbezogen sind, im Voraus zu erzeugen und der genannte Prozess zum Speichern von Zeichnungsgegenstandsinformationen die im Voraus erzeugten Zeichnungsgegenstandsinformationen im Voraus speichert, und
wenn ein anderes oder andere anzuzeigende dreidimensionale Bilder später den genannten anderen bzw. die genannten anderen Gegenstände einbeziehen, die genannte Einrichtung zum Erzeugen von Zeichnungsgegenstandsinformationen die Zeichnungsgegenstandsinformationen über den genannten anderen bzw. die genannten anderen Gegenstände nicht erneut erzeugt und die Zeichnungseinrichtung das genannte andere bzw. die genannten ändern dreidimensionalen Bilder unter Verwendung der im Voraus gespeicherten Zeichnungsgegenstandsinformationen erzeugt.

21. Bilderzeugungsverfahren nach Anspruch 20, **dadurch gekennzeichnet, dass** der genannte Prozess zum Erzeugen von Zeichnungsgegenstandsinformationen dazu vorgesehen ist, die Zeichnungsgegenstandsinformationen über eines oder mehrere Gegenstände als das genannte andere bzw. die genannten anderen Gegenstände, die um einen dem genannten dreidimensionalen Bild entsprechenden sichtbaren Bereich existieren, im Voraus zu erzeugen.

22. Computerprogramm, das einen Computer veranlasst, den Prozess zum Erzeugen von Zeichnungsgegenstandsinformationen, den Prozess zum Erzeugen von Koordinatentransformationsinformationen, den Prozess zum Speichern von Zeichnungsgegenstandsinformationen und den Prozess zum Speichern von Koordinatentransformationsinformationen nach Anspruch 20 auszuführen.

## Revendications

1. Appareil de génération d'image (1) ayant un dispositif de dessin (13), un processeur d'application de dessin (11) et une bibliothèque de graphiques (12) qui permet audit dispositif de dessin (13) de générer une image tridimensionnelle,
ledit processeur d'application de dessin (11) comprenant
i) un dispositif de génération d'informations d'objet de dessin (112) adapté pour générer des informations d'objet de dessin afin de générer une image de chaque objet dans un système respectif d'au moins un système de coordonnées unique qui se rapportent chacun à une unité d'information prédéterminée respective, en fonction d'informations de coordonnées tridimensionnelles à inclure dans une image tridimensionnelle à générer, l'objet étant un objet à illustrer, et
ii) un dispositif de génération d'informations de transformation de coordonnées (111) adapté pour générer des informations de transformation de coordonnées pour définir au moins un point visuel et une portée visuelle quand l'image tridimensionnelle doit être générée,
ladite bibliothèque de graphiques (12) comprenant
i) un dispositif de mémorisation d'informations d'objet de dessin (122) adapté pour mémoriser les informations d'objet de dessin générées ; et
ii) un dispositif de mémorisation d'informations de transformation de coordonnées (121) adapté pour mémoriser les informations de transformation de coordonnées générées ; et
ledit dispositif de dessin (13) étant adapté pour générer l'image tridimensionnelle en incorporant les informations de transformation de coordonnées mémorisées avec les informations d'objet de dessin mémorisées, pour chaque dite unité d'information prédéterminée,
ledit dispositif de génération d'informations d'objet de dessin (112) étant adapté pour générer, à l'avance, les informations d'objet de dessin relatives à un autre ou des autres objets qui ne sont pas inclus dans une image tridimensionnelle à afficher présentement, et ledit dispositif de mémorisation d'informations d'objet de dessin (122) étant adapté pour mémoriser, à l'avance, les informations d'objet de dessin qui sont générées à l'avance, et
si une autre ou des autres images tridimensionnelles à afficher ultérieurement comportent lesdits autre ou autres objets, ledit dispositif de génération d'informations d'objet de dessin (112) étant adapté pour ne pas générer à nouveau les informations d'objet de dessin relatives auxdits autre ou autres objets, et le dispositif de dessin (13) étant adapté pour générer lesdites autre ou autres images tridimensionnelles, en utilisant les informations d'objet de dessin qui sont mémorisées à l'avance.

2. Appareil de génération d'image (1) selon la revendication 1, **caractérisé en ce que** ledit dispositif de génération d'informations d'objet de dessin (112) est adapté pour générer, à l'avance, les informations d'objet de dessin relatives à un ou plusieurs objets, comme dits autre ou autres objets, qui existent autour d'une portée visuelle correspondant à ladite image tridimensionnelle.

3. Appareil de génération d'image (1) selon la revendication 2, **caractérisé en ce que** ledit dispositif de génération d'informations d'objet de dessin (112) est adapté pour générer, à l'avance, les informations d'objet de dessin relatives à un ou plusieurs objets, comme dits autre ou autres objets, qui existent dans une zone s'étendant derrière la portée visuelle telle que vue depuis le point visuel.

4. Appareil de génération d'image (1) selon la revendication 1, **caractérisé en ce que** ledit appareil (1) comprend en outre un dispositif de fourniture d'informations de position (16) qui est adapté pour fournir des informations de position, lesquelles indiquent une position courante de l'appareil de génération d'image, à une période prédéterminée dans le temps ou à une distance prédéterminée de déplacement, et
ledit dispositif de génération d'informations de transformation de coordonnées (111) est adapté pour générer les informations de transformation de coordonnées en fonction des informations de position fournies.

5. Appareil de génération d'image (1) selon la revendication 1, **caractérisé en ce que** chaque fois que les informations de transformation de coordonnées générées par ledit dispositif de génération d'informations de transformation de coordonnées (111) changent, le dispositif de dessin (13) est adapté pour générer une image en incorporant les informations de transformation de coordonnées changées aux informations d'objet de dessin.

6. Appareil de génération d'image (1) selon la revendication 1, **caractérisé en ce que** ledit processeur d'application de dessin (11) est adapté pour :
préparer une liste des informations d'objet de dessin relatives à une zone plus grande qu'une autre zone correspondant à ladite image tridimensionnelle ;
établir les informations de transformation de coordonnées ; et
ordonner une exécution d'un dessin dans ledit dispositif de dessin.

7. Appareil de génération d'image (1) selon la revendication 1, **caractérisé en ce que** ladite bibliothèque de graphiques (12) est adaptée pour :
gérer les informations de transformation de coordonnées ;
gérer les informations d'objet de dessin ; et
commander ledit dispositif de dessin (13).

8. Appareil de génération d'image (1) selon la revendication 1, **caractérisé en ce que** ledit processeur d'application de dessin (11) comprend une fonction pour recevoir des informations de carte comportant les informations de coordonnées tridimensionnelles à partir d'une base de données de carte incorporée dans un système de navigation.

9. Appareil de génération d'image (1) selon la revendication 8, **caractérisé en ce que** le point visuel est établi en fonction d'une position actuelle obtenue à l'aide d'un système de positionnement de corps mobile du système de navigation.

10. Appareil de génération d'image (1) selon l'une quelconque des revendications 1 à 9, **caractérisé en ce que** ledit dispositif de dessin (13) est adapté pour générer une image en perspective comme l'image tridimensionnelle.

11. Appareil de génération d'image (1) selon l'une quelconque des revendications 1 à 9, **caractérisé en ce que** lesdites informations de transformation de coordonnées comportent des informations pour définir une source de lumière, en plus des informations pour définir le point visuel et la portée visuelle.

12. Appareil de génération d'image (1) selon l'une quelconque des revendications 1 à 9, **caractérisé en ce que** le point visuel est établi en fonction d'un point visuel d'un conducteur d'un véhicule.

13. Appareil de génération d'image (1) selon l'une quelconque des revendications 1 à 9, **caractérisé en ce que** la portée visuelle est établie en fonction d'une portée visuelle d'un conducteur d'un véhicule.

14. Appareil de génération d'image (1) selon l'une quelconque des revendications 1 à 9, **caractérisé en ce que** le point visuel dans l'image tridimensionnelle est établie au centre d'un dispositif d'affichage d'image incorporé dans un système de navigation.

15. Appareil de génération d'image (1) selon l'une quelconque des revendications 1 à 9, **caractérisé en ce que** ledit dispositif de dessin (13) est adapté pour générer une image tridimensionnelle en superposant une pluralité d'images partielles qui doivent être générées en fonction des informations d'objet de dessin générées et mémorisées pour chaque objet.

16. Appareil de génération d'image (1) selon la revendication 15, **caractérisé en ce que** ledit appareil de génération d'image (1) comprend en outre une mémoire d'images (18) adaptée pour mémoriser temporairement la pluralité d'images partielles.

17. Appareil de génération d'image (1) selon l'une quelconque des revendications 1 à 9, **caractérisé en ce que** ledit processeur d'application de dessin (11) est adapté pour générer à nouveau les informations de transformation de coordonnées à l'aide dudit dispositif de génération d'informations de transformation de coordonnées (111), pendant que les informations d'objet de dessin sont tenues à jour pour un objet communément inclus dans deux images tridimensionnelles en série qui diffèrent séquentiellement l'une de l'autre dans le temps.

18. Appareil de génération d'image (1) selon l'une quelconque des revendications 1 à 9, **caractérisé en ce que** ledit processeur d'application de dessin (11) et ladite bibliothèque de graphiques (12) sont adaptés pour générer et mémoriser les informations d'objet de dessin et les informations de transformation de coordonnées de la pluralité d'images tridimensionnelles dans une opération multitâche.

19. Equipement électronique **caractérisé en ce qu'**il comprend :
l'appareil de génération d'image (1) selon la revendication 1 ;
une source d'informations qui fournit les informations tridimensionnelles audit processeur d'application de dessin (11) ; et
un dispositif d'affichage (64) adapté pour produire visuellement en sortie l'image tridimensionnelle générée par ledit dispositif de dessin (13).

20. Procédé de génération d'image comprenant :
i) un processus de génération d'informations d'objet de dessin pour générer une image de chaque objet dans un système respectif d'au moins un système de coordonnées unique qui se rapportent chacun à une unité d'information prédéterminée respective, en fonction d'informations de coordonnées tridimensionnelles à inclure dans une image tridimensionnelle à générer, l'objet étant un objet à illustrer, et
ii) un processus de génération d'informations de transformation de coordonnées pour définir au moins un point visuel et une portée visuelle quand l'image tridimensionnelle doit être générée,
iii) un processus de mémorisation d'informations d'objet de dessin pour mémoriser les informations d'objet de dessin générées ; et
iv) un processus de mémorisation d'informations de transformation de coordonnées pour mémoriser les informations de transformation de coordonnées générées ; et
un processus de génération d'image tridimensionnelle en incorporant les informations de transformation de coordonnées mémorisées avec les informations d'objet de dessin mémorisées, pour chaque dite unité d'information prédéterminée,
ledit processus de génération d'informations d'objet de dessin générant, à l'avance, les informations d'objet de dessin relatives à un autre ou des autres objets qui ne sont pas inclus dans une image tridimensionnelle à afficher présentement, et ledit processus de mémorisation d'informations d'objet de dessin mémorisant, à l'avance, les informations d'objet de dessin qui sont générées à l'avance, et
si une autre ou des autres images tridimensionnelles à afficher ultérieurement comportent ledit ou lesdits autres objets, ledit dispositif de génération d'informations d'objet de dessin ne génère pas à nouveau les informations d'objet de dessin relatives auxdits autre ou autres objets, et le dispositif de dessin génère lesdites autre ou autres images tridimensionnelles, en utilisant les informations d'objet de dessin qui sont mémorisées à l'avance.

21. Procédé de génération d'image selon la revendication 20, **caractérisé en ce que** ledit processus de génération d'informations d'objet de dessin sert à générer, à l'avance, les informations d'objet de dessin relatives à un ou plusieurs objets, comme dits autre ou autres objets, qui existent autour d'une portée visuelle correspondant à ladite image tridimensionnelle.

22. Programme informatique qui amène un ordinateur à exécuter le processus de génération d'informations d'objet de dessin, le processus de génération d'informations de transformation de coordonnées, le processus de mémorisation d'informations d'objet de dessin et le processus de mémorisation d'informations de transformation de coordonnées du procédé de génération d'image selon la revendication 20.
